(19) 

Europäisches
Patentamt
European
Patent Office
Office européen
des brevets

(11) **EP 3 175 423 B1**

(12) **EUROPEAN PATENT SPECIFICATION**

(45) Date of publication and mention
of the grant of the patent:
**22.05.2024 Bulletin 2024/21**

(21) Application number: **15738699.6**

(22) Date of filing: **20.07.2015**

(51) International Patent Classification (IPC):
**G06T 1/00** $^{(2006.01)}$

(52) Cooperative Patent Classification (CPC):
**G06T 1/005; G06T 2201/0052; G06T 2201/0083**

(86) International application number:
**PCT/EP2015/066585**

(87) International publication number:
**WO 2016/016040 (04.02.2016 Gazette 2016/05)**

(54) **DIGITAL IMAGE WATERMARKING SYSTEM AND METHOD**

SYSTEM UND VERFAHREN ZUR WASSERZEICHENMARKIERUNG VON DIGITALEN BILDERN

SYSTÈME ET PROCÉDÉ DE FILIGRANAGE D'IMAGE NUMÉRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2014 GB 201413610**

(43) Date of publication of application:
**07.06.2017 Bulletin 2017/23**

(73) Proprietor: **Innovation Ulster Limited
Coleraine County, Londonderry BT52 1SA (GB)**

(72) Inventors:
• **CONDELL, Joan
Coleraine County
Londonderry BT51 4EL (GB)**
• **YOGARAJAH, Pratheepan
Londonderry County
Londonderry BT47 6SE (GB)**

(74) Representative: **Appleyard Lees IP LLP
15 Clare Road
Halifax HX1 2HY (GB)**

(56) References cited:
**EP-A2- 1 118 961        US-A1- 2002 031 240
US-A1- 2005 244 032**

• **HAN-KI LEE ET AL: "A Digital Watermarking
Scheme in JPEG-2000 Using the Properties of
Wavelet Coefficient Sign", 23 April 2004
(2004-04-23), COMPUTATIONAL SCIENCE AND
ITS APPLICATIONS - ICCSA 2004; [LECTURE
NOTES IN COMPUTER SCIENCE;;LNCS],
SPRINGER-VERLAG, BERLIN/HEIDELBERG,
PAGE(S) 159 - 166, XP019006753, ISBN:
978-3-540-22054-1 abstract page 163 page 164
figures 1,7**
• **EMAD E. ABDALLAH: "Improved image
watermarking scheme using fast Hadamard and
discrete wavelet transforms", JOURNAL OF
ELECTRONIC IMAGING, vol. 16, no. 3, 1 July 2007
(2007-07-01), page 033020, XP055171034, ISSN:
1017-9909, DOI: 10.1117/1.2764466**
• **Gilani Asif ET AL: ""Watermarking by
Multi-resolution Hadamard Transform"", , 31
January 2001 (2001-01-31), pages 1-6,
XP093022255, Retrieved from the Internet:
URL:https://www.researchgate.net/publicati
on/250864041_Watermarking_by_Multi-resolut
ion_Hadamard_Transform [retrieved on
2023-02-08]**

EP 3 175 423 B1

## Description

Field of the Invention

The present invention relates to digital image watermarking. The invention relates particularly to digital watermarking of digital images that are intended to be printed and then electronically scanned.

Background to the Invention

Digital image watermarking involves hiding secret digital information in a digital cover image, usually to allow the authenticity, integrity or ownership of the watermarked image to be verified. A problem with conventional techniques arises when the watermarked image is printed and subsequently scanned. The print and scan process can introduce distortion that impairs the detection of the hidden information in the scanned image. For example, when printing an image a conventional colour printer prints different coloured inks onto a sheet using the standard CMYK (Cyan, Magenta, Yellow and Key (black)) colour model. However, when a digital image is displayed electronically on a screen the RGB (Red, Green, Blue) colour model is used and so image scanners tend to use the RGB colour model. Therefore, during the print and scan process sampling and quantization errors may be introduced into the image data.

Han-Ki Lee et al: "A Digital Watermarking Scheme in JPEG-2000 Using the Properties of Wavelet Coefficient Sign", 23 April 2004, COMPUTATIONAL SCIENCE AND ITS APPLICATIONS - ICCSA 2004; [LECTURE NOTES IN COMPUTER SCIENCE; LCNS], SPRINGER-VERLAG, BERLIN/HEIDLEBERG, PAGES 159-166 describes a blind watermarking scheme using the properties of wavelet coefficient sign. US 2005/244032 A1 describes a method and system including subjecting an original, pixel domain image to an Integer Wavelet Transformation to obtain a matrix of Integer Wavelet Transformation coefficients. EP 1 118 961 A2 describes an information embedding/tamper detecting apparatus and method. Gilani Asif ET AL: "Watermarking by Multi-resolution Hadamard Transform", on-line, 31 January 2001 describes a watermarking algorithm operating in the multi-resolution Hadamard transform domain.

It would be desirable to provide an improved digital image watermarking system and method that are less susceptible to the effects of errors that may be introduced during the print and scan process.

Summary of the Invention

There is provided a method of producing a printed image comprising digital information embedded in a digital cover in accordance with claim 1, a method for embedding digital information in a digital cover image in accordance with claim 13 and a method of detecting digital information in a digital watermarked image in accordance with claim 14. Other aspects of the invention are set forth in the dependent claims.

Brief Description of the Drawings

An embodiment of the invention is now described by way of example and with reference to the accompanying drawings in which:

Figure 1 is a block diagram of a digital image watermarking system embodying one aspect of the invention;

Figure 2 is a graphical representation of a block of image data components;

Figure 3 is a matrix of coefficients suitable for use when performing a Discrete Hadamard Transform (DHT), being part of the preferred method embodying the invention;

Figure 4 is a graphical illustration of a preferred method for embedding secret digital information in a digital cover image; and

Figure 5 is a graphical illustration of a preferred method for extracting the embedding secret digital information from a watermarked digital image.

Detailed Description of the Drawings

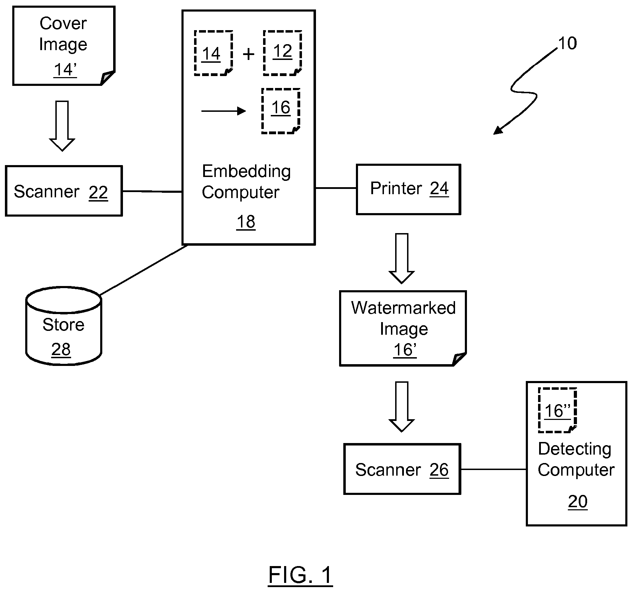

Referring now to Figure 1 of the drawings there is shown, generally indicated as 10, a digital image watermarking system embodying one aspect of the present invention. The preferred system 10 hides secret digital information in the form of a secret digital image 12 in a digital cover image 14 to produce a digital watermarked image 16. It will be understood that each digital image 12, 14, 16 comprises respective digital data components, usually referred to as pixels, which represent the respective image in the spatial domain. Each pixel may comprise multiple sub-pixels for representing colour or greyscale. For example, using the standard RGB colour model each pixel may comprise a respective sub-pixel for each of red (R), green (G) and blue (B).

The secret digital image 12 may for example comprise a barcode, typically a binary black and white barcode. The secret information need not necessarily comprise an image; more generally it may comprise any digital data, e.g. bit string, that is suitable for embedding in a digital image and capable of being detected once embedded. The secret digital data is sometimes referred to as a code or a digital watermark. The secret digital information may be generated in any convenient conventional manner. For example, in the case of the secret digital image 12, it may be purely computer-generated (i.e. not derived from a real world physical image), or may be generated by image scanning a physical rendering of the secret image, e.g. on paper or other physical printable.

The digital cover image 14 may be generated in any convenient conventional manner. For example it may be computer-generated (i.e. not derived from a real world physical image), or may be generated by image scanning a physical rendering 14' of the cover image 14, e.g. on paper or other physical printable. The digital cover image 14 is typically colour (e.g. RGB) or greyscale.

System 10 includes an embedding computer 18 configured to generate the watermarked image 16 from the secret image 12 and the cover image 14, as is described in more detail hereinafter. The embedding computer 18 may comprise any conventional computing device, for example a personal computer (PC) or laptop computer, supporting suitable computer software for generating the watermarked image 16.

System 10 includes a detecting computer 20 configured to detect the secret image 12 in the watermarked image 16, as is described in more detail hereinafter. The detecting computer 20 may comprise any conventional computing device, for example a personal computer (PC), laptop computer, tablet or smartphone, supporting suitable computer software for detecting the secret image 12.

The system 10 typically includes an image scanner 22, for example a conventional optical image scanner or scan-enabled computing device e.g. smart phone, connected to the embedding computer 18 in any conventional manner, e.g. by wired and/or wireless connection. In cases where the cover image 14 is derived from the real world cover image 14', the scanner 22 scans the real world cover image 14' and outputs corresponding digital data, i.e. the digital cover image 14, to the embedding computer 18. Alternatively, the cover image 14 may be obtained from a digital storage facility 28. In cases where the secret image 12 is derived from a real world secret image (not shown), the scanner 22 scans the real world secret image and outputs corresponding digital data, i.e. the digital secret image 12, to the embedding computer 18. Alternatively, the secret image 12 may be obtained from a digital storage facility 28.

The preferred system 10 includes a printer 24, for example a conventional inkjet or laser printer, connected to the embedding computer 18 in conventional manner, e.g. by wired and/or wireless connection. In preferred embodiments the printer 24 is a colour printer, typically one that prints using the CMYK colour model. In use, the printer 24 prints a real world watermarked image 16', i.e. renders the digital watermarked image 16 on a suitable physical printable, typically paper.

The illustrated system 10 includes a second image scanner 26, for example a conventional optical image scanner or scan-enabled computing device e.g. smart phone, connected to the detecting computer 18 in conventional manner, e.g. by wired and/or wireless connection. In use, the scanner 26 scans the real world watermarked image 16' and outputs corresponding digital data, i.e. a printed and scanned digital watermarked image 16", to the detecting computer 20.

It will be understood that the specific architecture of the illustrated system 10 is not limiting to the invention. For example, in alternative embodiments, the embedding and detecting processes may be performed by the same computing device, in which case there may be only one scanner.

The scanners 22, 26 are typically colour scanners. Colour scanners tend to use the RGB colour model when creating digital image data instead of the CMYK colour model that is typically used by the printer 24. This can create sampling and quantization errors in the digital image data.

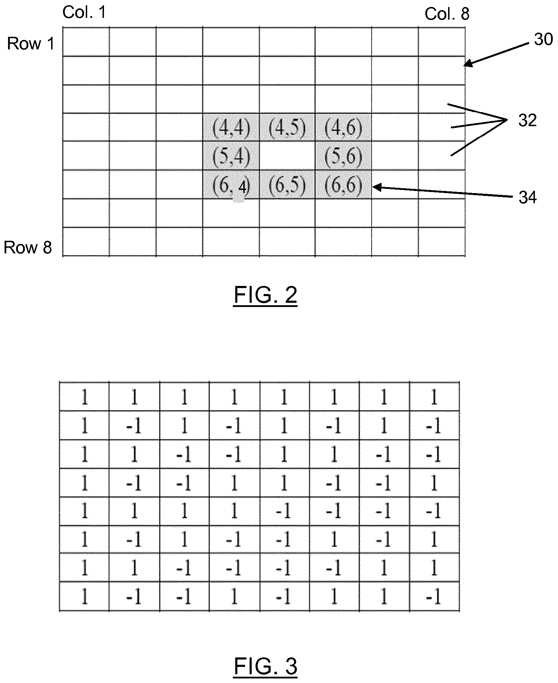

Referring now in particular to Figures 2 to 4, there is described a preferred method for embedding the secret image 12 in the cover image 14, the method being performed in this example by computer software supported by the embedding computer 18.

In this example it is assumed that the real world cover image 14' is scanned by scanner 22 to produce the digital cover image 14. The scanning process can introduce one or more border regions around the cover image that are not part of the cover image and which may adversely affect the watermarking process. Optionally therefore the digital cover image 14 is cropped to remove any unwanted border regions. This may be performed in any convenient conventional manner, e.g. manually by means of the crop tool of a digital image editor support by the computer 18.

The preferred embedding method comprises the following stages:

1. Obtain as inputs the secret image 12 (e.g. black & white binary barcode) and cover image 14 (e.g. grayscale or RGB colour).

2. Read the secret image 12 and convert it to binary watermark sequence, for example as follows:

    a. Convert the secret image 12 and convert to one dimensional binary array with size n, say $[1,0,0,1,1,1,............,0,1,1,0,1]_{[nx1]}$

    b. Perform error correction, e.g. by applying a one bit error correcting Hamming code to correct the error on the receiver side.

    c. Introduce parity bits for error correction, e.g. every 4 bits in the binary array may be converted to 7 bits. In the 7 bits, last 3 bits represent parity bits for error correction.

    d. Produce the Hamming coded watermark binary sequence as a one dimensional array with size (n/4)x7, say $[1,0,0,1,0,0,1,.......,1,0,0,1]_{[(n/4)*7]\times 1}$

3. Read the cover image 14.

4. If the cover image 14 is a grayscale image then consider it as the Y Channel (i.e. the luminescence or luma component) of the YCbCr colour space (Cb and Cr being the blue-difference and red-difference chroma components respectively). If the cover image 14 is a RGB colour image then convert the image from RGB colour space to YCbCr colour space. This may be achieved using any conventional RGB to YCbCr conversion process and results in a YCbCr version of the cover image 14.

5. Convert the cover image 14 from the spatial domain to the frequency domain, i.e. generate a frequency domain representation of the cover image 14. Preferably, this involves applying a Discrete Wavelet Transform (DWT), for example a one-level Haar DWT, to the Y Channel components of the spatial domain representation of the cover image 14. The resulting Y channel components of the frequency domain representation of the image 14 can be grouped into four different frequency sub-bands, commonly identified as LL, HL, LH and HH.

6. Partition the LL frequency domain components of the cover image 14 into blocks, each block comprising a respective plurality of the frequency domain components (each frequency domain component conveniently being represented by a respective frequency coefficient). In this example the LL frequency domain components are partitioned into 8x8 blocks.

7. Apply a Hadamard transform, preferably a Discrete Hadamard Transform (DHT), to each block of frequency coefficients to produce a respective block 30 of transformed frequency coefficients 32. This involves applying a Hadamard Matrix, preferably a DHT matrix, to each block. In this example, the 8x8 DHT matrix of Figure 3 is applied to each block. Figure 2 shows a resulting 8x8 block of transformed frequency coefficients. It is noted that the transformed frequency coefficients comprise positive (+) and/or negative (-) values.

8. For each block 30 of transformed frequency coefficients, a sub-set 34 of the coefficients are selected for hiding part of the secret image 12, e.g. a respective bit of the binary watermark sequence. In the illustrated example, eight inner frequency coefficients 32 are selected as shown in Figure 2, namely the coefficients at locations Row 4, Column 4 (4, 4) to Row Four Column 6 (4, 6); Row 5, Column 4 (5,4); Row 5, Column 6 (5,6); and Row 6, Column 4 (6,4) to Row 6, Column 6 (6,6).

9. A sign change operation is applied to one or more of the coefficients 32 in the sub-set 34 to hide a respective watermark bit in the respective block 30. Say the number of positive coefficients and number of negative coefficients 32 in the sub-set 34 are P and N respectively, then:

    a. If the watermark bit to be embedded in the sub-set 34 is 1, then one or more of the coefficients 32 of the sub-set 34 is modified (the modification typically involving a change in polarity, i.e. positive to negative or vice versa) to satisfy the condition P - N >= T1, where T1 is a threshold value and is set at 6 in the present example.

    b. If the watermark bit to be embedded in the sub-set 34 is 0, then one or more of the coefficients 32 of the sub-set 34 is modified (the modification typically involving a change in polarity, i.e. positive to negative or vice versa) to satisfy the condition N - P >= T2, where T2 is a threshold value and is set at 6 in the present example. Typically, but not necessarily, T1=T2.

10. The respective values of the coefficients 32 of the sub-set 34 are changed, as required, to a magnitude (which could be positive or negative as applicable) to protect the hidden secret data against attacks such as median filtering, print-and-scan attack and so on. Typically, changing the magnitude of the coefficients 32 involves increasing the magnitude to match or exceed a threshold value. It is preferred that all of the coefficients 32 in the sub-set 34 have their magnitudes increased, as required, in this way. In the present example, changing the coefficient values may be achieved using the following equation:

$$C^1 = \begin{cases} cutoff1 - n * (\|C\| - |C|), & if\ hadamard\ coded\ watermark = 0 \\ cutoff2 + n * (\|C\| - |C|), & if\ hadamard\ coded\ watermark = 1 \end{cases}$$

where

$C^1$ - changed coefficient value
$C$ - initial coefficient value
*cutoff1, cutoff2* - dynamic threshold values
$n$ - Step size (e.g. $n$ = 5)
$\|C\|$ is the smallest integer not less than the absolute value, i.e. magnitude, of C.

11. After applying the above operations, apply the inverse Hadamard transform, in this example the inverse DHT, to each modified block 30 to obtain the corresponding modified LL frequency components.

12. Apply the inverse frequency transform, in this case the inverse DWT, to the modified LL frequency components, and to the associated LH, HL and HH frequency components, to obtain the modified Y channel.

13. If the cover image 14 is grayscale then consider the resulting watermarked image 16 (commonly referred to as a stego image) as a grayscale image. If the cover image 14 is an RGB colour image then convert the modified YCbCr colour space data to the RGB colour space to produce the watermarked (stego) image 16.

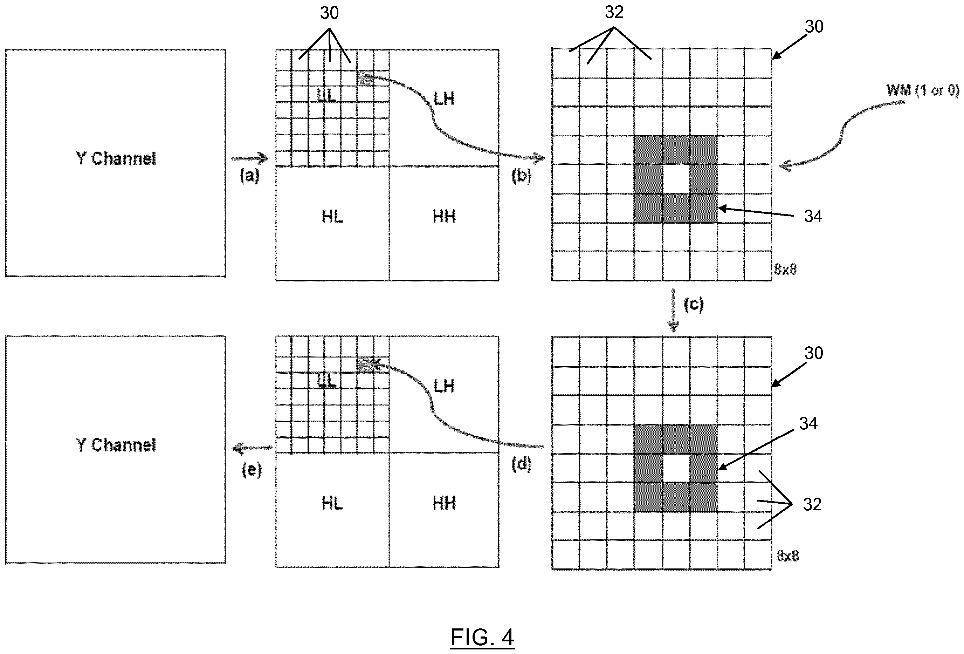

14. The output of the embedding process is the watermarked (stego) image 16
Figure 4, illustrates the preferred embedding method as follows:

(a) Apply DWT to the Y channel and generate the LL, LH, HL and HH sub-band coefficients;
(b) Divide LL into blocks 30. The size of the each block 30 is 8x8 pixels in this example. Apply the DHT to each block 30 and get the frequency coefficient values 32.
(c) Take a watermark (WM) bit (i.e. 1 or 0) and modify the frequency coefficient 32 values of the sub-set 34 (shaded);
(d) Apply inverse DHT to the modified block 30.
(e) Apply inverse DWT and generate the Y channel.

With regard to Stage 2 above, it is noted that the stated conversion technique is exemplary and any one or more of steps a. to d. may be modified or omitted as desired. Stage 2 may be omitted depending on the nature of the secret information to be hidden. For example, the secret information may be provided as a suitable binary watermark sequence, e.g. from the store 28 or generated by another process running on the computer 18, in which case there is no need to convert a secret image (since none is provided), and optionally no need to introduce error correction features.

With regard to Stage 4 above, it is preferred to use the Y Channel of the YCbCr colour space since the Y channel image data components are considered to be the most suitable aggregate of the corresponding RGB image components for present purposes.

Concerning Stage 5 above, other frequency domain transforms could be used in alternative embodiments, for example the Discrete Cosine Transform (DCT). The DWT is preferred as it provides spatial localization and multi-resolution characteristics that are similar to theoretical models of the human visual system, and can effectively distribute the watermark information evenly and achieve significantly high robustness against addictive noise attacks. The DWT decomposes a 2D image into four non-overlapping multi-resolution coefficient sets, which are usually referred to lower resolution approximation image (LL), horizontal (HL), vertical (LH) and diagonal (HH) detail components. LL represents the coarse-scale DWT coefficients while HL, LH and HH represent the fine-scale of DWT coefficients. To optimize imperceptibly and robustness of the watermark information, it is preferred to use the approximation sub-image LL coefficients to embed watermark.

In Stage 6 above, it is preferred to operate on the LL frequency sub-band because it is considered that modifying the coefficients of this sub-band is likely to create less distortion in the watermarked image 16 than modifying the coefficients of any of the other frequency sub-bands. It is noted that the block size need not necessarily be 8x8 and may alternatively take any other convenient size. The blocks 30 in any event preferably comprise a two-dimensional array, preferably a square array, of frequency coefficients 32.

In Stage 7 above, other Hadamard transforms may be used in alternative embodiments, e.g. a Sylvester-Hadamard Transform (SHT) may be used. More generally, it is preferred to apply a dual frequency domain transform (e.g. DWT followed by DHT or SHT) instead of a single domain frequency transform since this improves the robustness of the watermarking. It is found that combined transforms can compensate for the respective drawbacks of the individual transforms. A further alternative dual frequency transform is DWT with DCT. The DCT helps to separate relevant from irrelevant image content to generate silent image features. Similar to the DCT, a 2D Hadamard transformation can concentrate the energy of an image, and achieve higher performance than, for example a DFT. Consequently, using a Hadamard matrix performs well against lossy compression image formats such as JPEG (based on DCT) and JPEG200 (based on DWT). It is therefore preferred to use the DHT in conjunction with the DWT.

With regard to stage 8, in alternative embodiments the number of coefficients in the sub-set 34 may be fewer or more than 8 and need not necessarily include the specific coefficients shown in Figure 2. More generally, it is preferred that the sub-set 34 comprises multiple frequency coefficients but fewer than make up the whole block 30. In preferred embodiments the sub-set 34 comprises inner frequency coefficients 32 of the block 30, i.e. excludes coefficients 32 located at any edge of the block 30. This is because coefficients located at an edge of the block 30 may be affected by the background during the scanning process, i.e. may contain information not related to the actual intended image. In this connection and with reference for example to Figure 4, it is noted that the position of each component 32 in block 30 corresponds to the physical position of a respective pixel in the 2D spatial cover image 14, i.e. there is a one-to-one correspondence between the position of each frequency coefficient 32 and a respective pixel of the spatial cover image 14.

It is also preferred that the coefficients 32 of the sub-set 34 are located together within the block 30. Hence, in preferred embodiments, the sub-set 34 comprises coefficients located in a group substantially in the middle of the block 30. The specific coefficients that make up the sub-set 34 may be chosen empirically to ensure that coefficients that, if modified, would have a discernable impact on the appearance of the cover image in the watermarked image 16' are not selected. In the present example, the coefficient at location (5,5) is omitted from the sub-set 34 for this reason. In alternative embodiments the coefficients for the sub-set 34 may be selected using any other suitable criteria, e.g. the coefficients representing the lowest frequency values.

With regard to Stage 9, the value of the thresholds T1 and T2 may be selected depending on the size of the sub-set 34. T1 and T2 are typically less than the sub-set 34 size, but could be the same as the sub-set size, i.e. all coefficients 32 in the sub-set 34 are changed either to a positive or negative value to embed a watermark bit. In preferred embodiments, T1 and T2 are set at a value 2 less than the sub-set size. In alternative embodiments the alternative convention may be adopted, i.e. a '0' may be embedded using the P - N >= T1 rule and a '1' may be embedded using the N - P >= T2 rule. More generally, a '0' or '1' is embedded by changing the sign of one or more of the coefficients 32 in the sub-set 34 to satisfy a respective threshold indicative of the respective number of positive and negative coefficients in the sub-set 34. In preferred embodiments, selecting which coefficient(s) 32 are to have their sign changed is determined by the respective frequency represented by the respective coefficient 32, coefficients 32 advantageously being selected in order of ascending frequency. Hence the coefficient 32 representing the lowest frequency of those eligible to have their sign changed is changed first and so on. This is because modifying coefficients relating to lower frequencies tends to have less effect on the appearance of the watermarked image 16, 16' than higher frequency coefficients.

With regard to Stage 10, one option is to use fixed values for thresholds *cutoff1, cutoff2.* The values may for example be chosen experimentally. However respective cover images 14 contain different statistical properties based on image properties such as textures, edges and so on. Therefore, a fixed threshold value may not be appropriate for all the different images. In preferred embodiments, the threshold values *cutoff1, cutoff2* are dynamic, i.e. calculated for the respective cover image 14. The dynamic threshold values are applied to change the coefficient 32 values to certain respective frequency level. Determining the threshold values advantageously involves a statistical analysis of the values of the respective coefficients 32 in the respective selected sub-set 34 from all blocks 30 for a given cover image 14. A preferred method of determining the threshold values *cutoff1, cutoff2* is now described:

1. Obtain the values of the respective coefficients 32 in the respective selected sub-set 34 from all blocks 30;
2. Calculate mean and standard-deviation values for all of the obtained coefficients 32;
3. Using the mean and standard-deviation, fit to coefficient values to a probability density function (pdf);
4. Using the pdf function, select the coefficient values at a threshold significance level, e.g. 85% significance, to be *cutoff1* and *cutoff2* respectively.

Step 4 results in one negative coefficient value and one positive coefficient value being selected as *cutoff1* and *cutoff2,* the positive and negative values being located on either side of the zero coefficient value of the pdf. In this example, *cutoff1* is typically a negative value and, *cutoff2* is typically a positive value, and they may have the same or a different magnitude. In the preferred embodiment therefore, when the coefficient 32 being modified has a negative value (which in this example corresponds to a watermark '0' being embedded) the negative value is decreased (made more negative) by an amount dependent on the negative threshold *cutoff1* and on the difference between the respective coefficient value and a ceiling value, which is preferably the smallest integer not less than the absolute value, i.e. magnitude, of the respective coefficient value. When the coefficient 32 being modified has a positive value (which in this example corresponds to a watermark '1' being embedded) the positive value is increased (made more positive) by an amount dependent on the positive threshold *cutoff2* and on the difference between the respective coefficient value and a ceiling value, which is preferably the smallest integer not less than the absolute value, i.e. magnitude, of the respective coefficient value.

Stages 11 to 13 are the reverse of Stages 4 to 7 and may therefore be modified in accordance with any modifications made to Stages 4 to 7.

Referring now in particular to Figure 4, there is described a preferred method for detecting (or decoding) the embedded secret image 12 from the watermarked image 16", the method being performed in this example by computer software supported by the detecting computer 20.

In this example it is assumed that the real world watermarked image 16' is scanned by scanner 26 to produce the digital watermarked image 16". The scanning process can introduce one or more border regions around the cover image that are not part of the cover image and which may adversely affect the watermarking process. Optionally therefore the digital watermarked image 16" is cropped to remove any unwanted border regions. This may be performed in any convenient conventional manner, e.g. manually by means of the crop tool of a digital image editor support by the computer 20.

The preferred detecting method comprises the following stages:

1. Obtain as input the digital watermarked image 16";

2. Check the number of colour channels of image 16". If number of channel is one (i.e. grayscale) then assign the pixel values to Y channel. If the number of channels equal to three then convert RGB colour space to YCbCr colour space;

3. Apply one-level Haar DWT to Y Channel. Haar DWT portions Y channel into four different frequencies, i.e. LL, HL, LH and HH;

4. Partition LL into 8x8 blocks 30';

5. The DHT matrix (Figure 3) is applied to each block 30' and the frequency coefficients 32' in the sub-set 34' are evaluated for each block 30';

6. For each block 30', calculate the number of positive coefficients P' and negative coefficients N';

7. Extract the (hamming coded) binary watermark sequence bits from each block:

   a. if (P'-N') >= (N'-P') then hamming coded binary bit is 1
   b. else hamming coded binary bit is 0

8. Apply the Hamming code algorithm on the extracted hamming coded binary sequence and get the decoded binary watermark sequence; and

9. The secret data 12 is reconstructed from the decoded binary sequence.

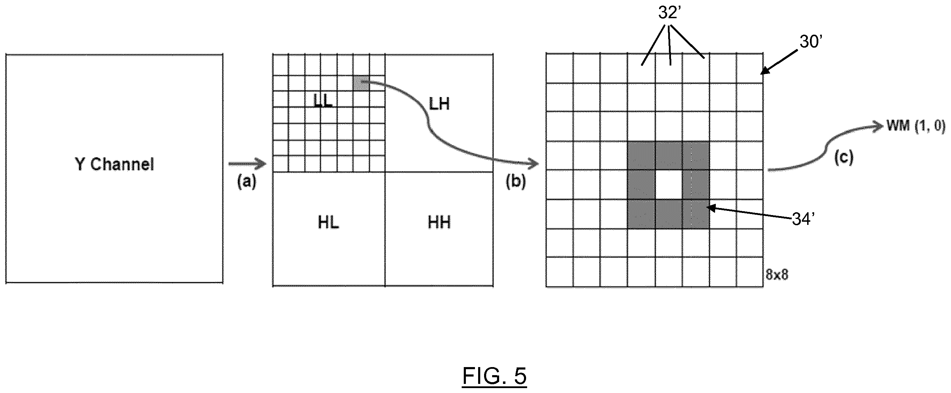

This is illustrated in Figure 5 as follows:

(a) Apply DWT to the Y channel and generate the LL, LH, HL and HH sub-bands;
(b) Divide the LL sub-band into blocks 30'. The size of the each block is 8x8 pixels in this example. Apply the DHT to each block 30' and get the frequency coefficient values.
(c) Consider the frequency coefficient values of the sub-set 34 (shaded) of each block 30' and extract the watermark bit 1 or 0.

It will be understood that the specific configuration of the detection method is dependent on the specific configuration of the embedding method and so the detection method may vary in a manner corresponding to that described

[a

EP 3 175 423 B1

above for the embedding method, as would be apparent to a skilled person.

The preferred method of embedding secret information in cover images is sufficiently robust to handle print-and-scan distortions, JPEG compression attacks as well as median filtering attacks. Advantageously, this is achieved by, amongst other things, selecting appropriate frequency coefficients for secret data hiding, and changing the magnitude of the selected frequency coefficients.

The invention is not limited to the embodiment(s) described herein but can be amended or modified without departing from the scope of the present invention as defined by the claims that follow.

## Claims

1. A method of producing a printed image comprising digital information embedded in a digital cover image, the method comprising:

    obtaining a frequency domain representation of said digital cover image, said frequency domain representation comprising a plurality of frequency domain components;
    partitioning said frequency domain representation of the digital cover image into blocks, each block comprising a two-dimensional array of said frequency components;
    selecting a sub-set of said frequency components for each block, the respective sub-set comprising a plurality of said frequency components of the respective block;
    embedding a respective bit of said digital information in a respective one of said sub-sets by changing the polarity of the value of at least one of the respective frequency coefficients in the respective sub-set to create a respective modified block;
    obtaining, using said respective modified blocks, a spatial domain representation of said digital cover image in which said digital information is embedded; and
    printing said spatial domain representation of said digital cover image on a printable medium,
    wherein said obtaining a frequency domain representation of said digital cover image involves applying a one-level Haar Discrete Wavelet Transformation, DWT, to a spatial domain representation of the cover image,
    wherein obtaining a frequency domain representation of said digital cover image further involves applying a Discrete Hadamard Transform, DHT, to frequency coefficients produced by said DWT to produce said frequency domain components, and
    wherein said polarity changing involves changing the polarity of the value of one or more of the respective frequency coefficients in the respective sub-set such that the total number of positive values in the sub-set or the total number of negative values in the sub-set satisfies a respective threshold depending on the value of the bit being embedded, the method further comprising determining said threshold value by statistical analysis of the values of the respective frequency coefficients from the respective sub-sets of all of the blocks.

2. The method of any preceding claim, wherein said sub-set selecting involves selecting frequency components from an inner part of the respective two-dimensional array of the respective block.

3. The method of any preceding claim, wherein said sub-set selecting involves selecting frequency components that are grouped together in the respective two-dimensional array of the respective block.

4. The method of any preceding claim, wherein said sub-set selecting involves selecting frequency components that are located substantially in the middle of the respective two-dimensional array of the respective block.

5. The method of any preceding claim, further including changing the magnitude of at least some of the frequency components in the respective sub-sets.

6. The method of any preceding claim, wherein said Hadamard transform is applied to the frequency coefficients of the LL sub-band produced by said DWT.

7. The method of any preceding claim, wherein said digital cover image is represented in the YCbCr colour space, and wherein said frequency domain representation of said digital cover image is obtained from the Y channel components of the YCbCr colour space of the digital cover image representation.

8. The method of any preceding claim, wherein said digital cover image is represented in the RGB colour space, said method including converting said digital cover image from the RGB colour space to the YCbCr colour space.

8

9. The method of any preceding claim, wherein said digital cover image is obtained by digitally scanning a real-world version of said cover image.

10. The method of any preceding claim, wherein said digital information comprises, or is derived from, a digital image, and/or comprises a binary watermark sequence, optionally derived from a digital image.

11. The method of any preceding claim, wherein said two-dimensional array of said frequency components is a square array preferably of size 8x8.

12. The method of any preceding claim further including digitally scanning said printed spatial domain representation of said digital cover image to create a digital version of said digital cover image in which said digital information is embedded; and detecting said digital information in said digital version, and wherein, preferably, said detecting involves:

    obtaining a frequency domain representation of said digital version of said cover image, said frequency domain representation comprising a plurality of frequency domain components;
    partitioning said frequency domain representation of the digital version of said cover image into blocks, each block comprising a two-dimensional array of said frequency components;
    selecting a sub-set of said frequency components for each block, the respective sub-set corresponding to the respective sub-set of the respective block of said digital cover image;
    detecting a respective bit of said digital information in a respective one of said sub-sets by analysing the polarity of respective frequency coefficients in the respective sub-set.

13. A method for embedding digital information in a digital cover image, the method comprising:

    obtaining a frequency domain representation of said digital cover image, said frequency domain representation comprising a plurality of frequency domain components;
    partitioning said frequency domain representation of the digital cover image into blocks, each block comprising a two-dimensional array of said frequency components;
    selecting a sub-set of said frequency components for each block, the respective sub-set comprising a plurality of said frequency components of the respective block;
    embedding a respective bit of said digital information in a respective one of said sub-sets by changing the polarity of the value of at least one of the respective frequency coefficients in the respective sub-set to create a respective modified block; and
    obtaining, using said respective modified blocks, a spatial domain representation of said digital cover image in which said digital information is embedded,
    wherein said obtaining a frequency domain representation of said digital cover image involves applying a one-level Haar Discrete Wavelet Transformation, DWT, to a spatial domain representation of the cover image,
    wherein obtaining a frequency domain representation of said digital cover image further involves applying a Discrete Hadamard Transform, DHT, to frequency coefficients produced by said DWT to produce said frequency domain components,
    wherein said polarity changing involves changing the polarity of the value of one or more of the respective frequency coefficients in the respective sub-set such that the total number of positive values in the sub-set or the total number of negative values in the sub-set satisfies a respective threshold depending on the value of the bit being embedded, the method further comprising determining said threshold value by statistical analysis of the values of the respective frequency coefficients from the respective sub-sets of all of the blocks.

14. A method of detecting digital information in a digital watermarked image, the method comprising:

    obtaining a frequency domain representation of said digital watermarked image, said frequency domain representation comprising a plurality of frequency domain components;
    partitioning said frequency domain representation into blocks, each block comprising a two-dimensional array of said frequency components;
    selecting a sub-set of said frequency components for each block, the respective sub-set corresponding to the respective sub-set of the respective block of said digital watermarked image;
    detecting a respective bit of said digital information in a respective one of said sub-sets by analysing the polarity of respective frequency coefficients in the respective subset;
    wherein said obtaining a frequency domain representation of said digital watermarked image involves applying a one-level Haar Discrete Wavelet Transformation, DWT, to a spatial domain representation of the watermarked image,

wherein obtaining a frequency domain representation of said digital watermarked image further involves applying a Discrete Hadamard Transform, DHT, to frequency coefficients produced by said DWT to produce said frequency domain components, and

wherein said polarity changing involves changing the polarity of the value of one or more of the respective frequency coefficients in the respective sub-set such that the total number of positive values in the sub-set or the total number of negative values in the sub-set satisfies a respective threshold depending on the value of the bit being embedded, the method further comprising determining said threshold value by statistical analysis of the values of the respective frequency coefficients from the respective sub-sets of all of the blocks, and wherein, preferably, said method further includes obtaining said digital watermarked image by digitally scanning a printed spatial domain representation of said watermarked image.

**Patentansprüche**

1.  Verfahren zum Herstellen eines gedruckten Bilds, umfassend digitale Informationen, die in ein digitales Titelbild eingebettet sind, das Verfahren umfassend:

    Erhalten einer Frequenzbereichsdarstellung des digitalen Titelbilds, die Frequenzbereichsdarstellung umfassend eine Vielzahl von Frequenzbereichskomponenten;
    Partitionieren der Frequenzbereichsdarstellung des digitalen Titelbilds in Blöcke, jeder Block umfassend eine zweidimensionale Anordnung der Frequenzkomponenten; Auswählen eines Teilsatzes der Frequenzkomponenten für jeden Block, der jeweilige Teilsatz umfassend eine Vielzahl der Frequenzkomponenten des jeweiligen Blocks; Einbetten eines jeweiligen Bits der digitalen Informationen in einen jeweiligen der Teilsätze durch Ändern der Polarität des Werts von mindestens einem der jeweiligen Frequenzkoeffizienten im jeweiligen Teilsatz zum Erstellen eines jeweiligen modifizierten Blocks;
    Erhalten, unter Verwendung der jeweiligen modifizierten Blöcke, einer Darstellung eines räumlichen Bereichs des digitalen Titelbilds, in dem die digitalen Informationen eingebettet sind; und
    Drucken der Darstellung eines räumlichen Bereichs des digitalen Titelbilds auf einem bedruckbaren Medium, wobei das Erhalten einer Frequenzbereichsdarstellung des digitalen Titelbilds ein Anwenden einer einstufigen Haar-Diskrete-Wavelet-Transformation, Haar-DWT, auf eine Darstellung eines räumlichen Bereichs des Titelbilds beinhaltet,
    wobei das Erhalten einer Frequenzbereichsdarstellung des digitalen Titelbilds ferner ein Anwenden einer diskreten Hadamard-Transformation, DHT, auf Frequenzkoeffizienten, die durch die DWT hergestellt werden, um die Frequenzbereichskomponenten herzustellen, beinhaltet und wobei das Polaritätsändern ein Ändern der Polarität des Werts eines oder mehrerer der jeweiligen Frequenzkoeffizienten im jeweiligen Teilsatz beinhaltet, sodass die Gesamtanzahl von positiven Werten im Teilsatz oder die Gesamtanzahl von negativen Werten im Teilsatz je nach dem Wert des eingebetteten Bits eine jeweilige Schwelle erreicht, das Verfahren ferner umfassend ein Bestimmen des Schwellenwerts durch eine statistische Analyse der Werte der jeweiligen Frequenzkoeffizienten aus den jeweiligen Teilsätzen aller Blöcke.

2.  Verfahren nach einem der vorstehenden Ansprüche, wobei das Teilsatzauswählen ein Auswählen von Frequenzkomponenten aus einem Innenteil der jeweiligen zweidimensionalen Anordnung des jeweiligen Blocks beinhaltet.

3.  Verfahren nach einem der vorstehenden Ansprüche, wobei das Teilsatzauswählen ein Auswählen von Frequenzkomponenten, die in der jeweiligen zweidimensionalen Anordnung des jeweiligen Blocks zusammen gruppiert sind, beinhaltet.

4.  Verfahren nach einem der vorstehenden Ansprüche, wobei das Teilsatzauswählen ein Auswählen von Frequenzkomponenten, die sich im Wesentlichen in der Mitte der jeweiligen zweidimensionalen Anordnung des jeweiligen Blocks befinden, beinhaltet.

5.  Verfahren nach einem der vorstehenden Ansprüche, ferner umfassend ein Ändern der Größe von mindestens einigen der Frequenzkomponenten in den jeweiligen Teilsätzen.

6.  Verfahren nach einem der vorstehenden Ansprüche, wobei die Hadamard-Transformation auf die Frequenzkoeffizienten des LL-Teilbands, das durch die DWT hergestellt wird, angewendet wird.

7. Verfahren nach einem der vorstehenden Ansprüche, wobei das digitale Titelbild im YCbCr-Farbraum dargestellt wird und wobei die Frequenzbereichsdarstellung des digitalen Titelbilds aus den Y-Kanal-Komponenten des YCbCr-Farbraums der Darstellung des digitalen Titelbilds erhalten wird.

8. Verfahren nach einem der vorstehenden Ansprüche, wobei das digitale Titelbild im RGB-Farbraum dargestellt wird, das Verfahren einschließlich eines Umwandelns des digitalen Titelbilds aus dem RGB-Farbraum in den YCbCr-Farbraum.

9. Verfahren nach einem der vorstehenden Ansprüche, wobei das digitale Titelbild durch ein digitales Scannen einer Version der realen Welt des Titelbilds erhalten wird.

10. Verfahren nach einem der vorstehenden Ansprüche, wobei die digitalen Informationen ein digitales Bild umfassen oder daraus abgeleitet sind und/oder eine binäre Wasserzeichenfolge, optional aus einem digitalen Bild abgeleitet, umfassen.

11. Verfahren nach einem der vorstehenden Ansprüche, wobei die zweidimensionale Anordnung der Frequenzkomponenten eine quadratische Anordnung, vorzugsweise der Größe 8x8, ist.

12. Verfahren nach einem der vorstehenden Ansprüche, ferner umfassend ein digitales Scannen der gedruckten Darstellung eines räumlichen Bereichs des digitalen Titelbilds zum Erstellen einer digitalen Version des digitalen Titelbilds, in dem die digitalen Informationen eingebettet sind; und ein Detektieren der digitalen Informationen in der digitalen Version und wobei, vorzugsweise, das Detektieren umfasst:

Erhalten einer Frequenzbereichsdarstellung der digitalen Version des Titelbilds, die Frequenzbereichsdarstellung umfassend eine Vielzahl von Frequenzbereichskomponenten; Partitionieren der Frequenzbereichsdarstellung der digitalen Version des Titelbilds in Blöcke, jeder Block umfassend eine zweidimensionale Anordnung der Frequenzkomponenten;
Auswählen eines Teilsatzes der Frequenzkomponenten für jeden Block, der jeweilige Teilsatz entsprechend dem jeweiligen Teilsatz des jeweiligen Blocks des digitalen Titelbilds;
Detektieren eines jeweiligen Bits der digitalen Informationen in einem jeweiligen der Teilsätze durch Analysieren der Polarität jeweiliger Frequenzkoeffizienten im jeweiligen Teilsatz.

13. Verfahren zum Einbetten digitaler Informationen in ein digitales Titelbild, das Verfahren umfassend:

Erhalten einer Frequenzbereichsdarstellung des digitalen Titelbilds, die Frequenzbereichsdarstellung umfassend eine Vielzahl von Frequenzbereichskomponenten;
Partitionieren der Frequenzbereichsdarstellung des digitalen Titelbilds in Blöcke, jeder Block umfassend eine zweidimensionale Anordnung der Frequenzkomponenten; Auswählen eines Teilsatzes der Frequenzkomponenten für jeden Block, der jeweilige Teilsatz umfassend eine Vielzahl der Frequenzkomponenten des jeweiligen Blocks;
Einbetten eines jeweiligen Bits der digitalen Informationen in einen jeweiligen der Teilsätze durch Ändern der Polarität des Werts von mindestens einem der jeweiligen Frequenzkoeffizienten im jeweiligen Teilsatz zum Erstellen eines jeweiligen modifizierten Blocks und Erhalten, unter Verwendung der jeweiligen modifizierten Blöcke, einer Darstellung eines räumlichen Bereichs des digitalen Titelbilds, in dem die digitalen Informationen eingebettet sind,
wobei das Erhalten einer Frequenzbereichsdarstellung des digitalen Titelbilds ein Anwenden einer einstufigen Haar-Diskrete-Wavelet-Transformation, Haar-DWT, auf eine Darstellung eines räumlichen Bereichs des Titelbilds beinhaltet,
wobei das Erhalten einer Frequenzbereichsdarstellung des digitalen Titelbilds ferner ein Anwenden einer diskreten Hadamard-Transformation, DHT, auf Frequenzkoeffizienten, die durch die DWT hergestellt werden, um die Frequenzbereichskomponenten herzustellen, beinhaltet,
wobei das Polaritätsändern ein Ändern der Polarität des Werts eines oder mehrerer der jeweiligen Frequenzkoeffizienten im jeweiligen Teilsatz beinhaltet, sodass die Gesamtanzahl von positiven Werten im Teilsatz oder die Gesamtanzahl von negativen Werten im Teilsatz je nach dem Wert des eingebetteten Bits eine jeweilige Schwelle erreicht, das Verfahren ferner umfassend ein Bestimmen des Schwellenwerts durch eine statistische Analyse der Werte der jeweiligen Frequenzkoeffizienten aus den jeweiligen Teilsätzen aller Blöcke.

14. Verfahren zum Detektieren digitaler Informationen in einem digitalen Wasserzeichenbild, das Verfahren umfassend:

Erhalten einer Frequenzbereichsdarstellung des digitalen Wasserzeichenbilds, die Frequenzbereichsdarstellung umfassend eine Vielzahl von Frequenzbereichskomponenten; Partitionieren der Frequenzbereichsdarstellung in Blöcke, jeder Block umfassend eine zweidimensionale Anordnung der Frequenzkomponenten; Auswählen eines Teilsatzes der Frequenzkomponenten für jeden Block, der jeweilige Teilsatz entsprechend dem jeweiligen Teilsatz des jeweiligen Blocks des digitalen Wasserzeichenbilds; Detektieren eines jeweiligen Bits der digitalen Informationen in einem jeweiligen der Teilsätze durch Analysieren der Polarität jeweiliger Frequenzkoeffizienten im jeweiligen Teilsatz; wobei das Erhalten einer Frequenzbereichsdarstellung des digitalen Wasserzeichenbilds ein Anwenden einer einstufigen Haar-Diskrete-Wavelet-Transformation, Haar-DWT, auf eine Darstellung eines räumlichen Bereichs des Wasserzeichenbilds beinhaltet, wobei das Erhalten einer Frequenzbereichsdarstellung des digitalen Wasserzeichenbilds ferner ein Anwenden einer diskreten Hadamard-Transformation, DHT, auf Frequenzkoeffizienten, die durch die DWT hergestellt werden, um die Frequenzbereichskomponenten herzustellen, beinhaltet und wobei das Polaritätsändern ein Ändern der Polarität des Werts eines oder mehrerer der jeweiligen Frequenzkoeffizienten im jeweiligen Teilsatz beinhaltet, sodass die Gesamtanzahl von positiven Werten im Teilsatz oder die Gesamtanzahl von negativen Werten im Teilsatz je nach dem Wert des eingebetteten Bits eine jeweilige Schwelle erreicht, das Verfahren ferner umfassend ein Bestimmen des Schwellenwerts durch eine statistische Analyse der Werte der jeweiligen Frequenzkoeffizienten aus den jeweiligen Teilsätzen aller Blöcke, und wobei, vorzugsweise, das Verfahren ferner ein Erhalten des digitalen Wasserzeichenbilds durch ein digitales Scannen einer gedruckten Darstellung eines räumlichen Bereichs des Wasserzeichenbilds einschließt.

## Revendications

1. Procédé de production d'une image imprimée comprenant des informations numériques intégrées dans une image de couverture numérique, le procédé comprenant les étapes suivantes :

    obtenir une représentation dans le domaine fréquentiel de ladite image de couverture numérique, ladite représentation dans le domaine fréquentiel comprenant une pluralité de composantes dans le domaine fréquentiel ;
    partitionner en blocs ladite représentation dans le domaine fréquentiel de l'image de couverture numérique, chaque bloc comprenant un réseau bidimensionnel desdites composantes fréquentielles ;
    sélectionner un sous-ensemble desdites composantes fréquentielles pour chaque bloc, le sous-ensemble respectif comprenant une pluralité desdites composantes fréquentielles du bloc respectif ;
    intégrer un bit respectif desdites informations numériques dans un sous-ensemble respectif desdits sous-ensembles en changeant la polarité de la valeur d'au moins un des coefficients fréquentiels respectifs dans le sous-ensemble respectif afin de créer un bloc modifié respectif ;
    obtenir, à l'aide desdits blocs modifiés, une représentation dans le domaine spatial de ladite image de couverture numérique dans laquelle lesdites informations numériques sont incorporées ; et
    imprimer ladite représentation dans le domaine spatial de ladite image de couverture numérique sur un support imprimable,
    dans lequel ladite obtention d'une représentation dans le domaine fréquentiel de ladite image de couverture numérique implique d'appliquer une transformation en ondelettes discrètes de Haar à un niveau, DWT, à une représentation dans le domaine spatial de l'image de couverture,
    dans lequel l'obtention d'une représentation dans le domaine fréquentiel de ladite image de couverture numérique implique en outre d'appliquer une transformée discrète de Hadamard, DHT, aux coefficients fréquentiels produits par ladite DWT pour produire lesdites composantes du domaine fréquentiel, et
    dans lequel ledit changement de polarité comprend de modifier la polarité de la valeur d'un ou de plusieurs des coefficients fréquentiels respectifs dans le sous-ensemble respectif de sorte que le nombre total de valeurs positives dans le sous-ensemble ou le nombre total de valeurs négatives dans le sous-ensemble satisfasse un seuil respectif en fonction de la valeur du bit intégré, le procédé comprenant en outre de déterminer ladite valeur de seuil par analyse statistique des valeurs des coefficients fréquentiels respectifs à partir des sous-ensembles respectifs de tous les blocs.

2. Procédé selon l'une quelconque des revendications précédentes, dans lequel ladite sélection d'un sous-ensemble comprend de sélectionner des composantes fréquentielles dans une partie intérieure du réseau bidimensionnel respectif du bloc respectif.

3. Procédé selon l'une quelconque des revendications précédentes, dans lequel ladite sélection d'un sous-ensemble comprend de sélectionner des composantes fréquentielles qui sont regroupées dans le réseau bidimensionnel respectif du bloc respectif.

4. Procédé selon l'une quelconque des revendications précédentes, dans lequel ladite sélection d'un sous-ensemble comprend de sélectionner des composantes fréquentielles qui sont situées sensiblement au milieu du réseau bidimensionnel respectif du bloc respectif.

5. Procédé selon l'une quelconque des revendications précédentes, comprenant en outre de modifier la magnitude d'au moins certaines des composantes fréquentielles dans les sous-ensembles respectifs.

6. Procédé selon l'une quelconque des revendications précédentes, dans lequel ladite transformée de Hadamard est appliquée aux coefficients fréquentiels de la sous-bande LL produite par ladite DWT.

7. Procédé selon l'une quelconque des revendications précédentes, dans lequel ladite image de couverture numérique est représentée dans l'espace colorimétrique YCbCr, et dans lequel ladite représentation dans le domaine fréquentiel de ladite image de couverture numérique est obtenue à partir des composantes du canal Y de l'espace colorimétrique YCbCr de la représentation de l'image de couverture numérique.

8. Procédé selon l'une quelconque des revendications précédentes, dans lequel ladite image de couverture numérique est représentée dans l'espace colorimétrique RVB, ledit procédé comprenant de convertir ladite image de couverture numérique de l'espace colorimétrique RVB à l'espace colorimétrique YCbCr.

9. Procédé selon l'une quelconque des revendications précédentes, dans lequel ladite image de couverture numérique est obtenue par balayage numérique d'une version du monde réel de ladite image de couverture.

10. Procédé selon l'une quelconque des revendications précédentes, dans lequel lesdites informations numériques comprennent, ou sont dérivées d'une image numérique, et/ou comprennent une séquence de filigrane binaire, éventuellement dérivée d'une image numérique.

11. Procédé selon l'une quelconque des revendications précédentes, dans lequel ledit réseau bidimensionnel desdites composantes fréquentielles est un réseau carré de préférence de taille 8x8.

12. Procédé selon l'une quelconque des revendications précédentes, comprenant en outre d'effectuer un balayage numérique de ladite représentation imprimée dans le domaine spatial de ladite image de couverture numérique pour créer une version numérique de ladite image de couverture numérique dans laquelle lesdites informations numériques sont intégrées ; et de détecter lesdites informations numériques dans ladite version numérique, et dans lequel, de préférence, ladite détection comprend les étapes suivantes :

obtenir une représentation dans le domaine fréquentiel de ladite version numérique de ladite image de couverture, ladite représentation dans le domaine fréquentiel comprenant une pluralité de composantes dans le domaine fréquentiel ;
partitionner en blocs ladite représentation dans le domaine fréquentiel de la version numérique de ladite image de couverture, chaque bloc comprenant un réseau bidimensionnel desdites composantes fréquentielles ;
sélectionner un sous-ensemble desdites composantes fréquentielles pour chaque bloc, le sous-ensemble respectif correspondant au sous-ensemble respectif du bloc respectif de ladite image de couverture numérique ;
détecter un bit respectif desdites informations numériques dans un sous-ensemble respectif desdits sous-ensembles en analysant la polarité des coefficients fréquentiels respectifs dans le sous-ensemble respectif.

13. Procédé d'incorporation d'informations numériques dans une image de couverture numérique, le procédé comprenant les étapes suivantes :

obtenir une représentation dans le domaine fréquentiel de ladite image de couverture numérique, ladite représentation dans le domaine fréquentiel comprenant une pluralité de composantes dans le domaine fréquentiel ;
partitionner en blocs ladite représentation dans le domaine fréquentiel de l'image de couverture numérique, chaque bloc comprenant un réseau bidimensionnel desdites composantes fréquentielles ;
sélectionner un sous-ensemble desdites composantes fréquentielles pour chaque bloc, le sous-ensemble respectif comprenant une pluralité desdites composantes fréquentielles du bloc respectif ;
intégrer un bit respectif desdites informations numériques dans un sous-ensemble respectif desdits sous-ensembles en changeant la polarité de la valeur d'au moins un des coefficients fréquentiels respectifs dans le sous-ensemble respectif afin de créer un bloc modifié respectif ; et

obtenir, à l'aide desdits blocs modifiés, une représentation dans le domaine spatial de ladite image de couverture numérique dans laquelle lesdites informations numériques sont incorporées ;

dans lequel ladite obtention d'une représentation dans le domaine fréquentiel de ladite image de couverture numérique implique d'appliquer une transformation en ondelettes discrètes de Haar à un niveau, DWT, à une représentation dans le domaine spatial de l'image de couverture,

dans lequel l'obtention d'une représentation dans le domaine fréquentiel de ladite image de couverture numérique implique en outre d'appliquer une transformée discrète de Hadamard, DHT, aux coefficients fréquentiels produits par ladite DWT pour produire lesdites composantes du domaine fréquentiel,

dans lequel ledit changement de polarité comprend de modifier la polarité de la valeur d'un ou de plusieurs des coefficients fréquentiels respectifs dans le sous-ensemble respectif de sorte que le nombre total de valeurs positives dans le sous-ensemble ou le nombre total de valeurs négatives dans le sous-ensemble satisfasse un seuil respectif en fonction de la valeur du bit intégré, le procédé comprenant en outre de déterminer ladite valeur de seuil par analyse statistique des valeurs des coefficients fréquentiels respectifs à partir des sous-ensembles respectifs de tous les blocs.

**14.** Procédé de détection d'informations numériques dans une image numérique filigranée, le procédé comprenant les étapes suivantes :

obtenir une représentation dans le domaine fréquentiel de ladite image filigranée numérique, ladite représentation dans le domaine fréquentiel comprenant une pluralité de composantes dans le domaine fréquentiel ;

partitionner en blocs ladite représentation dans le domaine fréquentiel, chaque bloc comprenant un réseau bidimensionnel desdites composantes fréquentielles ;

sélectionner un sous-ensemble desdites composantes fréquentielles pour chaque bloc, le sous-ensemble respectif correspondant au sous-ensemble respectif du bloc respectif de ladite image filigranée numérique ;

détecter un bit respectif desdites informations numériques dans un sous-ensemble respectif desdits sous-ensembles en analysant la polarité des coefficients fréquentiels respectifs dans le sous-ensemble respectif ;

dans lequel ladite obtention d'une représentation dans le domaine fréquentiel de ladite image filigranée numérique implique d'appliquer une transformation en ondelettes discrètes de Haar à un niveau, DWT, à une représentation dans le domaine spatial de l'image filigranée,

dans lequel l'obtention d'une représentation dans le domaine fréquentiel de ladite image filigranée numérique implique en outre d'appliquer une transformée discrète de Hadamard, DHT, aux coefficients fréquentiels produits par ladite DWT pour produire lesdites composantes du domaine fréquentiel, et

dans lequel ledit changement de polarité comprend de modifier la polarité de la valeur d'un ou de plusieurs coefficients fréquentiels respectifs dans le sous-ensemble respectif de sorte que le nombre total de valeurs positives dans le sous-ensemble ou le nombre total de valeurs négatives dans le sous-ensemble satisfasse à un seuil respectif en fonction de la valeur du bit intégré, le procédé comprenant en outre de déterminer ladite valeur de seuil par analyse statistique des valeurs des coefficients fréquentiels respectifs à partir des sous-ensembles respectifs de tous les blocs, et dans lequel, de préférence, ledit procédé comprend en outre d'obtenir ladite image numérique filigranée par balayage numérique d'une représentation imprimée dans le domaine spatial de ladite image filigranée.

EP 3 175 423 B1

FIG. 1

EP 3 175 423 B1

FIG. 2

| 1 | 1 | 1 | 1 | 1 | 1 | 1 | 1 |
|---|---|---|---|---|---|---|---|
| 1 | -1 | 1 | -1 | 1 | -1 | 1 | -1 |
| 1 | 1 | -1 | -1 | 1 | 1 | -1 | -1 |
| 1 | -1 | -1 | 1 | 1 | -1 | -1 | 1 |
| 1 | 1 | 1 | 1 | -1 | -1 | -1 | -1 |
| 1 | -1 | 1 | -1 | -1 | 1 | -1 | 1 |
| 1 | 1 | -1 | -1 | -1 | -1 | 1 | 1 |
| 1 | -1 | -1 | 1 | -1 | 1 | 1 | -1 |

FIG. 3

FIG. 4

EP 3 175 423 B1

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005244032 A1

- EP 1118961 A2

**Non-patent literature cited in the description**

- **HAN-KI LEE et al.** A Digital Watermarking Scheme in JPEG-2000 Using the Properties of Wavelet Co-efficient Sign. *COMPUTATIONAL SCIENCE AND ITS APPLICATIONS - ICCSA,* 23 April 2004

- LECTURE NOTES IN COMPUTER SCIENCE; LC-NS. SPRINGER-VERLAG, 159-166
- **GILANI ASIF et al.** *Watermarking by Multi-resolution Hadamard Transform,* 31 January 2001